# EUROPEAN PATENT SPECIFICATION

(11) **EP 4 125 343 B1**
(45) Date of publication and mention of the grant of the patent: **05.11.2025**
(21) Application number: 21718656.8
(22) Date of filing: 25.03.2021
(51) Int. Cl.: A01K 1/00

(54) **SHOCK PROTECTION FOR USE IN A STABLE**
STOSSSCHUTZ ZUR VERWENDUNG IN EINEM STALL
PROTECTION CONTRE LES CHOCS DESTINÉE À ÊTRE UTILISÉE DANS UNE ÉTABLE

(30) Priority: 26.03.2020 BE 202005197
(43) Date of publication of application: 08.02.2023
(73) Proprietor: de Gendt, Gavin, 1840 Malderen (BE)
(72) Inventor: de Gendt, Gavin, 1840 Malderen (BE)
(74) Representative: De Clercq, Krista
(86) International application number: PCT/IB2021/052481
(87) International publication number: WO 2021/191835

(56) References cited:
- WO-A1-2016/128546
- GB-A- 275 384

## Description

The present invention relates to a shock protection for use in a stable to protect a hoofed animal.

It is known that a horse in a stable regularly kicks the stable wall with its hind legs.

This can lead to injuries to the horse's legs if the wall is made of a non-flexible material such as concrete, brick, wood or the like.

Another common problem is that resting foals or other hoofed animals lie on their sides with their legs facing a wall.

When the foals then try to get up, they try to get a grip on the edge to push themselves up.

This often leads to the problem that the foal's hooves slide away from the wall, thus preventing it from getting up of its own accord and, in time, even causing it to die.

It is known from GB275384A that the walls of the stable can be lined with a rubber mat which is attached directly to the wall, such that a kick from the horse is slightly dampened, but not sufficiently, causing the horse to experience a recoil resulting in possible injury.

Also for foals and other hoofed animals that have got cast, such rubber mat directly attached to the wall does not offer sufficient hold to get up.

It is also known from GB275384A that a rubber mat can be attached at a distance from the wall, whereby the rubber mat is attached to the wall by means of screws and slats.

A disadvantage of this is that the screws may come loose over time due to the hoofed animal's kicks, causing the rubber mat to come loose and/or offer no protection.

Another disadvantage consists in that hoofed animals may get injuries to their legs and/or hooves by kicking against protruding and/or loose screws.

Yet another disadvantage of said invention GB275384A is that after attaching the rubber mat at a distance from the wall, dirt and vermin can still end up behind it.

The purpose of the present invention is to provide a solution to the aforementioned and one or more other disadvantages.

The present invention discloses a shock protection according to claim 1.

An advantage of the invention is that the shock protection is mounted at a desired distance from the wall of the stable, in other words with a gap between the wall and the mat, such that when the hoofed animal kicks the shock protection the impact thereof is at least partly absorbed, such that the risk of injuries to the hoofed animal's legs is drastically reduced.

Another advantage is that the mats and corner pieces are joined and/or overlap and are mounted such that any infiltration of dirt and vermin behind the mat is prevented.

Another advantage is that by mounting the shock protection at a distance from the wall, the shock protection gives way when a force is exercised on it. If a foal or other hoofed animal gets cast, it can push off against the shock protection more easily to roll back, thus strongly reducing the risk of mortality of the hoofed animal.

The mat extends from the bottom of the stable up to the desired height of the wall whereby the lower edge of the mat is joined against the bottom of the stable to prevent infiltration of dirt and vermin behind the mat.

In a practical embodiment the mat is mounted at a distance from the wall of the stable and the mat extends from the bottom of the stable up to a height of at least 60 cm, preferably up to a height of at least 100 cm and more preferably up to a height of at least 160 cm, in other words up to a height that is suitable to absorb a kick of a hoofed animal, and this depending on the size of the relevant hoofed animal.

The mat is rectangular in shape and preferably made of elastomers, for example but not exclusively of natural rubber, synthetic rubber or other materials with similar properties.

The shock protection contains a mounting profile at its upper edge that is rounded at the top and over which the mat is or can be mounted.

The rounded shape of the shock protection at the top prevents the horse from injuring itself on it and also causes the horse to have less grip when trying to push itself off from it with its front legs.

The mat is attached to the wall by means of the mounting profile in a way such that the upper edge of the mat is joined against the wall, to prevent dirt and vermin from infiltrating behind the mat.

In addition the shock protection is also provided with an attachment profile at the lower edge of the mat whereby the attachment profile has a breadth corresponding to the desired distance between the mat and the wall, and with which the mat can be attached to the wall in a way such that dirt and vermin are prevented from infiltrating behind the mat.

Preferably, but not restrictively, in a practical embodiment the breadth of the mounting profile corresponds with the breadth of the attachment profile such that the mat in mounted condition is parallel with the wall whereby the distance between the wall and the mat amounts to approximately the same over the whole length of the mat.

In a stable consisting of two or more walls, whereby each wall breadth-wise is provided with said mat, which join at a corner, in which corner pieces have been or are provided.

An advantage of such corner pieces is that they make it easier for mats to be joined in a corner in that the connecting side edges of the mats do not need to be precisely joined against each other.

In a practical embodiment, said corner pieces can be provided for both inner corners and outer corners in a stable.

The corner pieces are provided with protruding flaps which are mounted such that in a corner of the stable they are joined against the edges of the mats on either side of the corner whereby the flaps of the corner pieces in mounted condition overlap with said side edges of the mat and this to prevent the infiltration of dirt and vermin behind the mat.

The aforementioned mounting profile contains an incision on the underside which is mounted over a hook in the wall over which the mounting profile is slideable lengthways such that the mounting profile and the mat can be slid in one piece behind or over the flaps of the corner piece.

Furthermore, in their preferred embodiment, the mounting profiles, the attachment profiles and the corner pieces are made of synthetic material or another material with analogue properties.

With the intention of better showing the characteristics of the invention, a few preferred embodiments of a shock protection according to the invention for use in a stable are described hereinafter by way of an example, without any limiting nature, with reference to the accompanying figures, wherein:
figure 1 schematically shows a perspective view of a stable equipped with a shock protection according to the invention;
figure 2 is the vertical cross-section according to line II-II of a wall with the shock protection of figure 1, showing a foal that has got cast against a wall;
figure 3 shows a horizontal cross-section according to the line III-III of an inner corner of the stable in figure 1;
figure 4 shows a horizontal cross-section according to the line IV-IV of an outer corner of the stable in figure 1;
figure 5 shows a perspective view of the part indicated in figure 2 with F5;
figure 6 shows a cross-section according to line VI-VI in figure 5.

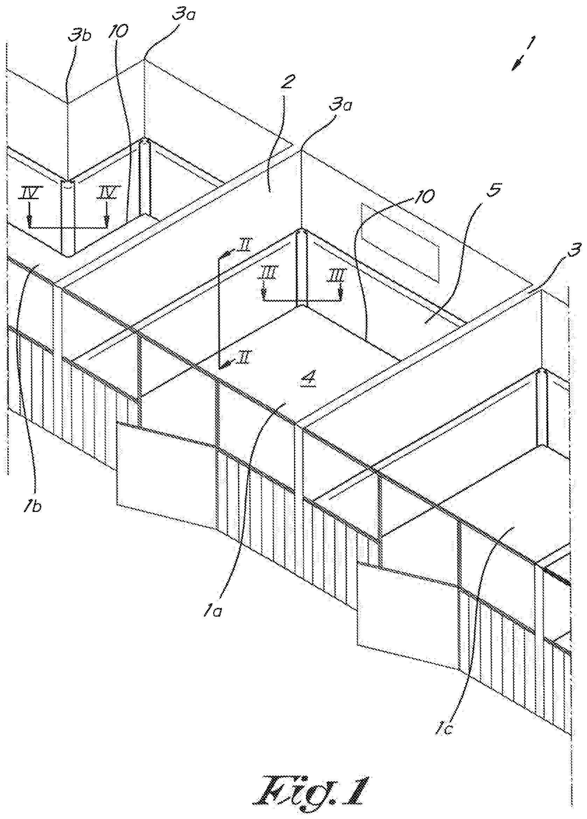

The stable 1 shown in figure 1 with three boxes, respectively 1a, 1b and 1c contains walls 2, corners 3 and a bottom 4 and is equipped with a shock protection 5 for a hoofed animal whereby the shock protection 5 contains a mat 6 which is attached at a desired height A to a wall 2 of the stable 1 and extends breadth-wise between the corners 3 of the stable 1.

Corner pieces 7 are provided in the corners 3 of the stable 1 which extend vertically over said height A and against which mats 6 of the shock protection 5 are joined with their side edges 8.

The shock protection 5 may contain corner pieces 7 for an inner corner 3a and an outer corner 3b respectively.

Each mat 6 is attached at a distance B from the wall 2 with its upper edge 9 against the wall 2 by means of a mounting profile 11 at the top and by means of an attachment profile 12 at the bottom, such that a space 13 is left between the mat 6 and the relevant wall 2.

The mat 6 is made of a flexible material which in case of a kick of a horse toward said space 13 can flexibly deform to thus dampen the kick of the horse.

The mat 6 is for example a rubber mat 6 with a commercially available standard thickness of 8 mm.

The height A of the shock protection 5 depends on the animal to be housed in the stable 1, for example between 60 cm and 160 cm.

The upper edge 9 of the mat 5 is joined against the wall 2 and reaches from the rounded upperside of the mounting profile 11 to the bottom 4 of the stable 1 where the lower part of the mat 6 is applied to an attachment profile 12 to the wall 2 and whereby the lower edge 10 of the mat 6 is joined against the bottom 4 of the stable 1.

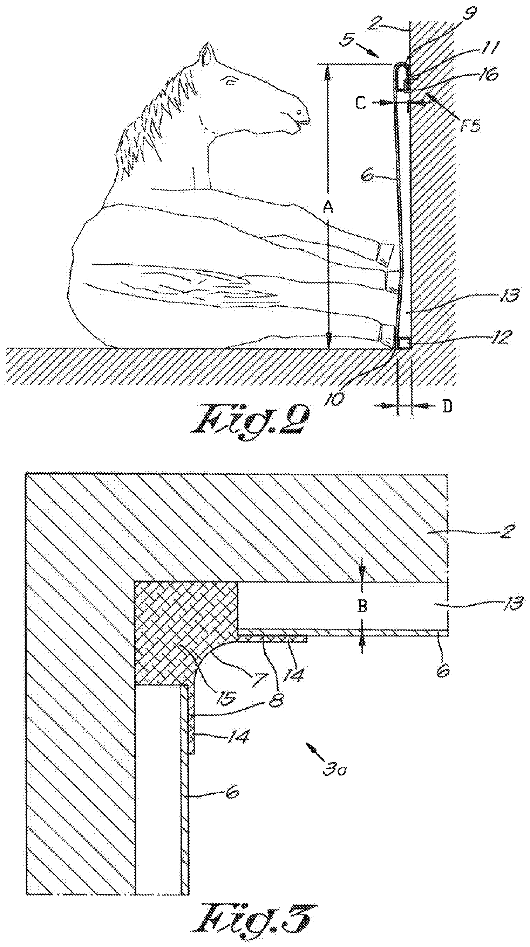

The distance B between the mat 6 and the wall 2 is determined by the breadth C of the mounting profile 11 at the top and the breadth D of the attachment profile 12 at the bottom. Preferably and as shown in the example of figure 2, the breadth C of the mounting profile 11 is similar to the breadth D of the attachment profile 12 such that the distance B between the mat 6 and the wall 2 is practically the same over the entire height A and length and thus in other words, the mat 6 is parallel with the wall 2.

Figure 3 shows the horizontal cross-section of the shock protection 5 on the level of an inner corner 3a in box 1a with a corresponding corner piece 7 against which the mats 6 are joined on either side of the corner piece 7.

The corner piece 7 is according to the invention provided with a solid body 15 made of rubber or the like that is joined in the corner 3 against the walls 2 and is provided with laterally extending flaps 14 which overlap the mats 6 on either side, to prevent infiltration of dirt and vermin.

The corner piece 7 is attached in the corners 3 of the stable 1 by means of glue or the like, for example.

For attaching the corner pieces 7 preferably screwless and/or nail-free fasteners are chosen such that the corner pieces also remained attached in the corners after kicking and/or pushing off by the hoofed animal, without fasteners coming loose.

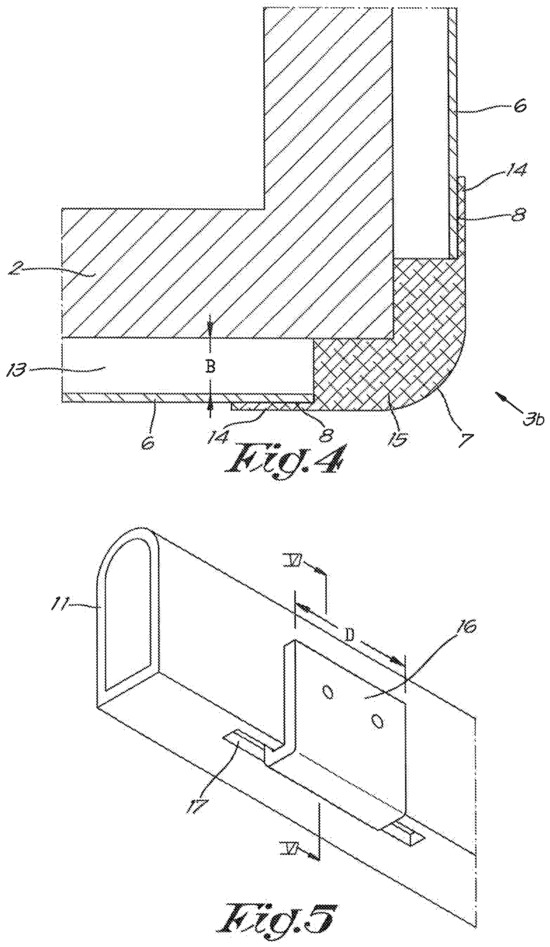

Figure 4 shows a horizontal cross-section of the shock protection 5 of an outer corner 3b in box 1b with corner piece 7, the mat 6 of which extends over the breadth of the wall 2, reaching up to the outer corner 3b in the stable 1 whereby the side edges 8 overlap over a certain section of the mat 6 with the flaps 14 of the corner piece 7.

Preferably, the overlapping sections are or have been attached to each other such that they form a seal to prevent the infiltration of dirt and vermin behind the mats 6.

In a preferred embodiment the overlapping sections, in other words, the sections of the side edges 8 of the mats 6 which overlap with the flaps 14 of the corner pieces 7, are attached to each other by means of glueing and/or applying screwless and/or nail-free fasteners and/or the like.

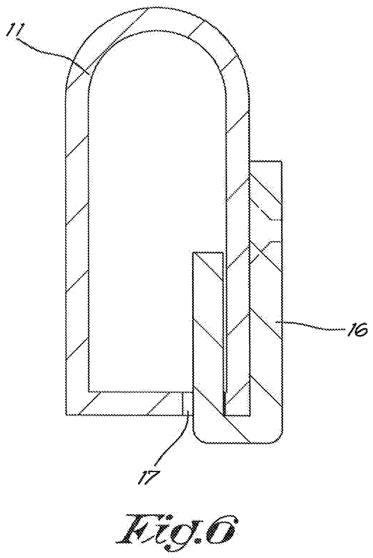

Preferably, the mounting profile 11 is slideably hung on the wall 2, for example by means of hooks 16 as shown in the figures 5 and 6, whereby the mounting profile 11 is provided at the bottom with incisions 17 which lengthways of the profile have a bigger size than those of the relevant hooks 16.

This facilitates the mounting of the shock protection 5 in the stable 1.

Indeed, first some corner pieces 7 are mounted, after which the mounting profile 11 with the mat 6 attached thereto can be hooked over the hooks 16 and subsequently can be slid parallel with the wall 2 up against the body 15 and behind the flaps 14 of the corner piece 7.

Once the shock protection 5 is mounted in this way it is able to absorb kicks of a horse or any other hoofed animal in a dampened way thanks to the flexibility of the mats 6 and the space 13 behind the mats 6 without heavy recoil which can injure the legs of the hoofed animal as is the case with the known shock protections 5 in a stable 1.

The shock protection 5 also offers a foal or other hoofed animal that got cast the possibility to push off against the shock protection 5 according to the invention and to regain its feet, which is not straightforward when a mat 6 is attached directly to the wall 2 of the stable 1.

The present invention is by no means limited to the embodiments described as an example and shown in the figures, but a shock protection according to the invention can be realised in all kinds of forms and dimensions without departing from the scope of the invention defined in the appended claims.

## Claims

1. A shock protection (5) intended for covering walls (2) extending between corners (3) of a stable (1), comprising at least one mat (6) made from rubber or the like which is sufficiently flexible to absorb any kicks of a hoofed animal such as a horse or the like, and
at least two corner pieces (7) for attaching the side edges (8) of the mat (6) in said corners (3), whereby the mat can be attached at a distance (B) from the wall (2) of the stable (1), **characterised in that** the corner pieces (7) are provided with a solid body (15) made of rubber or the like for joining in the corner (3) against the walls at either side of the corner and are provided with flaps (14) which in a mounted condition laterally extend from the body on either side of the corner and overlap with the side edges (8) of the mat (6) attached to the corner pieces at the distance (B) of the wall, whereby the overlapping is such that a seal is formed preventing the infiltration of dirt and vermin behind the mat (6).

2. Shock protection according to claim 1, **characterised in that** the shock protection (1) contains at least two mats (6) and at least three corner pieces (7) for attaching the side edges (8) of the mats (6) in said corners (3) at a distance (B) from the walls (2) of the stable (1) such that the side edges (8) of the mats (6) and corner pieces (7) are joined to prevent dirt and vermin from infiltrating behind the mats (6) .

3. Shock protection according to claim 1, **characterised in that** the shock protection (1) contains at least three mats (6) and at least four corner pieces (7) for attaching the side edges (8) of the mats (6) in said corners (3) at a distance (B) from the walls (2) of the stable (1) such that the side edges (8) of the mats (6) and corner pieces (7) are joined to prevent dirt and vermin from infiltrating behind the mats (6).

4. Shock protection according to claims 2 or 3, **characterised in that** the corner pieces (7) in a mounted condition are joined against the side edges (8) of the mats (6) on either side of the corner pieces (7), to prevent infiltration of dirt and vermin behind the mats (6).

5. Shock protection according to claim 1, **characterised in that** said seal is realised by attaching the overlapping sections to each other.

6. Shock protection according to claim 1, **characterised in that** the mat (6) is configured to extend when mounted from the bottom (4) of the stable (1) to a certain height A of the wall.

7. Shock protection according to any one of the previous claims, **characterised in that** the shock protection is configured such that when mounted the lower edge (10) of the mat (6) is joined against the bottom (4) of the stable (1) to prevent infiltration of dirt and vermin behind the mat.

8. Shock protection according to claim 6, **characterised in that** the mat (6) is configured to extend when mounted to a height A of at least 60 cm, preferably to a height A of at least 100 cm, more preferably to a height A of at least 160 cm.

9. Shock protection according to any one of the previous claims, **characterised in that** it contains a mounting profile (11) with which the mat can be hung with an upper edge (9) to the wall (2) of the stable (1).

10. Shock protection according to claim 9, **characterised in that** the mounting profile (11) contains a rounded section at the top over which the mat (6) can be applied, whereby in mounted condition the mat (6) is joined with the upper edge (9) against the wall (2) to avoid infiltration of dirt and vermin behind the mat.

11. Shock protection according to any one of the previous claims, **characterised in that** it contains an attachment profile (12) for attaching the mat (6) against the wall (2) with the lower edge (10) and this at said distance B.

12. Shock protection according to claim 11, **characterised in that** the attachment profile (12) is to be applied between the mat (6) and the wall (2) whereby the attachment profile (12) possesses a breadth D which corresponds with the desired distance B between the mat (6) and the wall (2).

13. Shock protection according to claim 11 or 12, **characterised in that** the breadth C of the mounting profile (11) corresponds with the breadth D of the attachment profile (12) such that when mounted the distance B between the mat (6) and the wall (2) is practically the same over the entire height A.

14. Shock protection according to claim 9, **characterised in that** it is provided with means to attach the mounting profile (11) slideably lengthways against the wall (6) such that the mounting profile (11) together with the mat (6) can be slid behind or over the flaps (14) of the corner piece (7).

15. Shock protection according to any one of the previous claims, **characterised in that** the corner pieces (7) are made from rubber or synthetic material.

## Patentansprüche

1. Stoßschutz (5) zum Abdecken von Wänden (2), die sich zwischen Ecken (3) eines Stalls (1) erstrecken, der Folgendes umfasst: mindestens eine Matte (6) aus Kautschuk oder ähnlichem Material, die ausreichend flexibel ist, um jeden Tritt eines Huftiers, wie beispielsweise eines Pferdes oder ähnlichem, zu absorbieren; und
mindestens zwei keilförmige Teile (7), die dazu bestimmt sind, die seitlichen Kanten der Matte (6) in den oben genannten Ecken (3) zu befestigen; wobei die Matte in einem Abstand (B) von der Wand (2) des Stalls (1) befestigt werden kann; **dadurch gekennzeichnet, dass** die keilförmigen Teile (7) mit einem massiven Körper (15) versehen sind, der aus Kautschuk oder ähnlichem Material ausgebildet ist, um ihn in der Ecke (3) an den Wänden auf jeder Seite der Ecke anzubringen, und mit Laschen (14) versehen sind, die sich in einem angebrachten Zustand in der seitlichen Richtung von dem Körper auf jeder Seite der Ecke erstrecken und die seitlichen Kanten (8) der Matte (6) überlappen, die an den keilförmigen Teilen in dem Abstand (B) von der Wand befestigt ist; wobei die Überlappung derart ist, dass eine Dichtung erzielt wird, die das Eindringen von Schmutz und Ungeziefer hinter die Matte (6) verhindert.

2. Stoßschutz nach Anspruch 1, **dadurch gekennzeichnet, dass** der Stoßschutz (1) mindestens zwei Matten (6) und mindestens drei keilförmige Teile (7) enthält, die dazu bestimmt sind, die Seitenkanten (8) der Matten (6) in den oben genannten Ecken (3) in einem Abstand (B) von den Wänden (2) des Stalls (1) derart zu befestigen, dass die Seitenkanten (8) der Matten (6) und die keilförmigen Teile (7) miteinander verbunden sind, um das Eindringen von Schmutz und Ungeziefer hinter die Matten (6) zu verhindern.

3. Stoßschutz nach Anspruch 1, **dadurch gekennzeichnet, dass** der Stoßschutz (1) mindestens drei Matten (6) und mindestens vier keilförmige Teile (7) enthält, die dazu bestimmt sind, die Seitenkanten (8) der Matten (6) in den oben genannten Ecken (3) in einem Abstand (B) von den Wänden (2) des Stalls (1) derart zu befestigen, dass die Seitenkanten (8) der Matten (6) und die keilförmigen Teile (7) miteinander verbunden sind, um das Eindringen von Schmutz und Ungeziefer hinter die Matten (6) zu verhindern.

4. Stoßschutz nach Anspruch 2 oder 3, **dadurch gekennzeichnet, dass** die keilförmigen Teile (7) in einem angebrachten Zustand an den seitlichen Kanten (8) der Matten (6) auf jeder Seite der keilförmigen Teile (7) angebracht sind, um das Eindringen von Schmutz und Ungeziefer hinter die Matten (6) zu verhindern.

5. Stoßschutz nach Anspruch 1, **dadurch gekennzeichnet, dass** die oben genannte Dichtung durch das Aneinanderbefestigen der überlappenden Abschnitte ausgebildet ist.

6. Stoßschutz nach Anspruch 1, **dadurch gekennzeichnet, dass** die Matte (6) derart ausgebildet ist, dass sie sich im angebrachten Zustand vom Boden (4) des Stalls (1) bis zu einer bestimmten Höhe A der Wand erstreckt.

7. Stoßschutz nach einem der vorstehenden Ansprüche, **dadurch gekennzeichnet, dass** der Stoßschutz derart ausgestaltet ist, dass in dem angebrachten Zustand die untere Kante (10) der Matte (6) an den Boden (4) des Stalls (1) anschließt, um das Eindringen von Schmutz und Ungeziefer hinter die Matte (6) zu verhindern.

8. Stoßschutz nach Anspruch 6, **dadurch gekennzeichnet, dass** die Matte (6) derart ausgebildet ist, dass sie sich in dem angebrachten Zustand bis zu einer Höhe A, die mindestens 60 cm beträgt, vorzugsweise bis zu einer Höhe A, die mindestens 100 cm beträgt, noch bevorzugter bis zu einer Höhe A, die mindestens 160 cm beträgt, ausdehnt.

9. Stoßschutz nach einem der vorstehenden Ansprüche, **dadurch gekennzeichnet, dass** er ein Montageprofil (11) enthält, mit dem die Matte mit einer oberen Kante (9) an der Wand (2) des Stalls (1) aufgehängt werden kann.

10. Stoßschutz nach Anspruch 9, **dadurch gekennzeichnet, dass** das Montageprofil (11) einen an seiner Oberseite abgerundeten Abschnitt enthält, über den die Matte (6) liegen kann; wobei die Matte (6) in dem angebrachten Zustand mit ihrer oberen Kante (9) an der Wand (2) angeschlossen ist, um das Eindringen von Schmutz und Ungeziefer hinter die Matte (6) zu verhindern.

11. Stoßschutz nach einem der vorstehenden Ansprüche, **dadurch gekennzeichnet, dass** er ein Befestigungsprofil (12) enthält, das dazu bestimmt ist, die Matte (6) mit ihrer unteren Kante (10) in dem oben genannten Abstand B an der Wand (2) zu befestigen.

12. Stoßschutz nach Anspruch 11, **dadurch gekennzeichnet, dass** das Befestigungsprofil (12) dazu bestimmt ist, zwischen der Matte (6) und der Wand (2) anzuliegen, wobei das Befestigungsprofil (12) eine Breite D aufweist, die dem gewünschten Abstand B zwischen der Matte (6) und der Wand (2) entspricht.

13. Stoßschutz nach Anspruch 11 oder 12, **dadurch gekennzeichnet, dass** die Breite C des Montageprofils (11) der Breite D des Befestigungsprofils (12) derart entspricht, dass in dem angebrachten Zustand der Abstand B zwischen der Matte (6) und der Wand (2) über die gesamte Höhe A im Wesentlichen gleich ist.

14. Stoßschutz nach Anspruch 9, **dadurch gekennzeichnet, dass** er mit Mitteln ausgestattet ist, die dazu bestimmt sind, das Montageprofil (11) in Längsrichtung gegen die Wand (2) verschiebbar zu fixieren, derart, dass das Montageprofil (11) zusammen mit der Matte (6) hinter oder über die Laschen (14) des keilförmigen Teils (7) gleiten kann.

15. Stoßschutz nach einem der vorstehenden Ansprüche, **dadurch gekennzeichnet, dass** die keilförmigen Teile (7) aus Kautschuk oder Kunststoff ausgebildet sind.

## Revendications

1. Protection contre les chocs (5) destinée à recouvrir des parois (2) qui s'étendent entre des coins (3) d'une étable (1), qui comprend : au moins un matelas (6) réalisé à partir de caoutchouc ou analogue, qui est suffisamment flexible pour absorber n'importe quel coup de pied d'un animal portant des sabots, tel qu'un cheval ou analogue ; et
au moins deux pièces cunéiformes (7) qui sont destinées à fixer les bords latéraux (8) du matelas (6) dans lesdits coins (3) ; dans laquelle le matelas peut être fixé à une distance (B) de la paroi (2) de l'étable (1) ; **caractérisée en ce que** les pièces cunéiformes (7) sont équipées d'un corps massif (15) qui est réalisé à partir de caoutchouc ou analogue à des fins de jonction dans le coin (3) contre les parois de chaque côté du coin et sont équipées de rabats (14) qui, dans un état monté, s'étendent dans la direction latérale à partir du corps de chaque côté du coin et chevauchent les bords latéraux (8) du matelas (6) qui est fixé aux pièces cunéiformes à la distance (B) de la paroi ; dans laquelle le chevauchement est tel que l'on obtient un joint d'étanchéité qui empêche l'infiltration de saletés et de vermine derrière le matelas (6).

2. Protection contre les chocs selon la revendication 1, **caractérisée en ce que** la protection contre les chocs (1) contient au moins deux matelas (6) et au moins trois pièces cunéiformes (7) qui sont destinées à fixer les bords latéraux (8) des matelas (6) dans lesdits coins (3) à une distance (B) des parois (2) de l'étable (1) d'une manière telle que les bords latéraux (8) des matelas (6) et les pièces cunéiformes (7) sont joints afin d'empêcher l'infiltration de saletés et de vermine derrière les matelas (6).

3. Protection contre les chocs selon la revendication 1, **caractérisée en ce que** la protection contre les chocs (1) contient au moins trois matelas (6) et au moins quatre pièces cunéiformes (7) qui sont destinées à fixer les bords latéraux (8) des matelas (6) dans lesdits coins (3) à une distance (B) des parois (2) de l'étable (1) d'une manière telle que les bords latéraux (8) des matelas (6) et les pièces cunéiformes (7) sont joints afin d'empêcher l'infiltration de saletés et de vermine derrière les matelas (6).

4. Protection contre les chocs selon la revendication 2 ou 3, **caractérisée en ce que** les pièces cunéiformes (7), dans un état monté, sont jointes aux bords latéraux (8) des matelas (6) de chaque côté des pièces cunéiformes (7), afin d'empêcher l'infiltration de saletés et de vermine derrière les matelas (6).

5. Protection contre les chocs selon la revendication 1, **caractérisée en ce que** ledit joint d'étanchéité est réalisé en fixant les uns aux autres les tronçons chevauchants.

6. Protection contre les chocs selon la revendication1, **caractérisée en ce que** le matelas (6) est configuré pour s'étendre, à l'état monté, à partir du sol (4) de l'étable (1) jusqu'à une certaine hauteur A de la paroi.

7. Protection contre les chocs selon l'une quelconque des revendications précédentes, **caractérisée en ce que** la protection contre les chocs est configurée d'une manière telle que, à l'état monté, le bord inférieur (10) du matelas (6) est joint au sol (4) de l'étable (1) afin d'empêcher l'infiltration de saletés et de vermine derrière le matelas (6).

8. Protection contre les chocs selon la revendication 6, **caractérisée en ce que** le matelas (6) est configuré pour s'étendre, à l'état monté, jusqu'à une hauteur A qui s'élève à au moins 60 cm, de préférence jusqu'à une hauteur A qui s'élève à au moins 100 cm, de manière plus préférée jusqu'à une hauteur A qui s'élève à au moins 160 cm.

9. Protection contre les chocs selon l'une quelconque des revendications précédentes, **caractérisée en ce qu'**elle contient un profilé de montage (11) avec lequel le matelas peut être suspendu avec un bord supérieur (9) à la paroi (2) de l'étable (1).

10. Protection contre les chocs selon la revendication 9, **caractérisée en ce que** le profilé de montage (11) contient un tronçon de forme arrondie à son sommet par dessus lequel le matelas (6) peut venir s'appliquer ; dans laquelle, à l'état monté, le matelas (6) est joint avec son bord supérieur (9) à la paroi (2) afin d'empêcher l'infiltration de saletés et de vermine derrière le matelas (6).

11. Protection contre les chocs selon l'une quelconque des revendications précédentes, **caractérisée en ce qu'**elle contient un profilé de fixation (12) qui est destiné à fixer le matelas (6) contre la paroi (2) avec son bord inférieure (10), et cela à ladite distance B.

12. Protection contre les chocs selon la revendication 11, **caractérisée en ce que** le profilé de fixation (12) est destiné à venir s'appliquer entre le matelas (6) et la paroi (2) ; dans lequel le profilé de fixation (12) possède une largeur D qui correspond à la distance désirée B entre le matelas (6) et la paroi (2).

13. Protection contre les chocs selon la revendication 11 ou 12, **caractérisée en ce que** la largeur C du profilé de montage (11) correspond à la largeur D du profilé de fixation (12), d'une manière telle que, à l'état monté, la distance B entre le matelas (6) et la paroi (2) est pratiquement la même sur toute la hauteur A.

14. Protection contre les chocs selon la revendication 9, **caractérisée en ce qu'**elle est équipée de moyens qui sont destinés à fixer le profilé de montage (11) en coulissement dans la direction de la longueur contre la paroi (6), d'une manière telle que le profilé de montage (11) de manière conjointe avec le matelas (6) peut glisser derrière ou par-dessus les rabats (14) de la pièce cunéiforme (7).

15. Protection contre les chocs selon l'une quelconque des revendications précédentes, caractérisée en ce les pièces cunéiformes (7) sont réalisées à partir de caoutchouc ou d'une matière synthétique.
